# EUROPÄISCHE PATENTSCHRIFT

(11) **EP 3 864 951 B1**
(45) Veröffentlichungstag und Bekanntmachung des Hinweises auf die Patenterteilung: **05.04.2023**
(21) Anmeldenummer: 21156651.8
(22) Anmeldetag: 11.02.2021
(51) Int. Cl.: A01D 46/28, A01G 17/02

(54) **DRUCKGASENTLAUBUNGSVORRICHTUNG**
COMPRESSED GAS DEFOLIATION DEVICE
DISPOSITIF DE DÉFOLIATION À GAZ COMPRIMÉ

(30) Priorität: 13.02.2020 DE 102020103712
(43) Veröffentlichungstag der Anmeldung: 18.08.2021
(73) Patentinhaber: ERO GmbH, 55469 Simmern (DE)
(72) Erfinder: RETZMANN, Jonas, 56281 Karbach (DE); HENN, Dominik, 56843 Lötzbeuren (DE)
(74) Vertreter: Cabinet Nuss

(56) Entgegenhaltungen:
- EP-A1- 2 820 940
- EP-B1- 2 820 940
- WO-A1-2019/015787
- DE-T2- 60 001 537
- FR-A1- 2 924 571

## Beschreibung

Die Erfindung betrifft eine Druckgasentlaubungsvorrichtung, nämlich eine Vorrichtung zur Entlaubung von Pflanzen mittels Druckgasstrahlen mit mindestens einer in einem Gehäuse rotierend antreibbaren Düsenanordnung, wobei die Düsenanordnung Teil eines um eine zugehörige zentrale Achse rotierenden Druckgasleitungssystems mit jeweils einer zentralen Druckgaszuführung ist, wobei jeweils ein oder mehrere Austrittsdüsen für Druckgas an einer oder mehreren Umfangspositionen des Druckgasleitungssystems vorgesehen sind. Die Austrittsdüsen erzeugen jeweils einen konzentrisch zur jeweiligen zentralen Achse rotierenden, parallel oder in einem spitzen Winkel zur Normalen der Rotationsebene ausgebildeten Druckgasstrahl, der im Entlaubungsbetrieb auf die Pflanze gerichtet ist. Das Gehäuse weist eine oder mehrere als kreisringförmige Öffnungsschlitze ausgebildete Austrittsöffnungen für die rotierenden Druckgasstrahlen auf, welche auf einer Kreisbahn liegen, auf der die jeweils zugehörigen Austrittsdüsen rotieren.

Mit dem Begriff "Umfangsposition" sind radial zur Drehachse bzw. zugehörigen zentralen Achse des Druckgasleitungssystems versetzte Orte gemeint, an denen sich die entsprechende Austrittsdüse befindet.

### Hintergrund

Im Stand der Technik sind verschiedene Einrichtungen und Verfahren zur Entlaubung von früchtetragenden Pflanzen bekannt. Insbesondere im Weinbau ist es üblich, dass die Weinstöcke eine bestimmte Zeit vor der Weinlese von überschüssigem oder ungewünschtem Laub befreit werden, welches etwa die Trauben verdeckt und gegen Sonneneinstrahlung abschirmt. Auch ist die Entlaubung sowohl bei einer späteren manuellen Lese hilfreich, da dann weniger Trauben durch Blätter abgedeckt sind, als auch bei einer mechanischen Lese, da hier weniger Blätter "mitgeerntet" werden. Zudem kann eine Reinigung oder Trocknung der Pflanzen bzw. der Laubwand mittels Druckluft erfolgen.

So offenbart etwa die DE 25 49 066 A1 ein Verfahren zur Entlaubung von Sträuchern oder Weinstöcken durch Druckgas. Hierzu werden ein oder mehrere Druckgasstrahlen von der Seite gegen einen Weinstock gerichtet, wobei die Druckgasstrahlen vorzugsweise in einer Normalebene zur Strahlrichtung bewegt werden. Vorgeschlagen ist hierzu, Druckgas in paarweise angeordnete, rotierend angetriebene und mit Düsen an ihren äußeren Enden versehene Rohrsegmente einzuleiten, welche um eine senkrecht zu einer Fahrtrichtung entlang der Weinstöcke gerichtete Achse rotieren.

Aus der DE 600 01 537 T2 ist eine Druckgasentlaubungsvorrichtung bekannt, bei der die rotierend angetriebenen Düsen hinter einer mit kreissegmentförmigen Schlitzen versehenen Abdeckung angeordnet sind.

Aus der FR 2 924 571 A1 ist eine Druckgasentlaubungsvorrichtung bekannt, bei der zwei parallel zueinander rotierend angetriebene Düsen hinter einer mit entsprechenden kreissegmentförmigen Schlitzen versehenen Abdeckung angeordnet sind.

Weitere Abdeckungen der rotierenden Einrichtungen und der Antriebselemente sind nicht vorgesehen, so dass sich abgetrennte Blätter, Blatteile und Pflanzenreste in der Vorrichtung absetzen und Störungen im Betrieb erzeugen können.

### Zusammenfassung der Erfindung

Die Aufgabe der vorliegenden Erfindung besteht in der Bereitstellung einer verbesserten Vorrichtung zur Entlaubung von Pflanzen mittels Druckgasstrahlen, einer so genannten Druckgasentlaubungsvorrichtung, bei dem einerseits rotierende außenseitige Flächen oder Bestandteile der Vorrichtung minimiert sind, so dass die Beschädigung von erwünschten Trieben, Beeren oder Früchten vermieden wird, und bei dem andererseits möglichst wenig durch die Entlaubung oder durch Abstreifen abgetrennte Blätter, Pflanzen- oder Blatteile und Pflanzenreste in die Vorrichtung und an die rotierenden Teile gelangen.

Gelöst wird diese Aufgabe durch die Merkmale des Hauptanspruchs. Weitere vorteilhafte Ausbildungen sind in den Unteransprüchen offenbart.

Eine erfindungsgemäße Druckgasentlaubungsvorrichtung weist mindestens eine in einem Gehäuse rotierend antreibbare Düsenanordnung auf. Das Gehäuse weist mit den Austrittsdüsen der Düsenanordnung korrespondierende kreisringförmige Öffnungsschlitze auf. Dabei ist jeder rotierenden Düsenanordnung mindestens eine innerhalb des Gehäuses in gleicher Winkelgeschwindigkeit mit der Düsenanordnung bzw. mit den Austrittsdüsen konzentrisch rotierende Ringscheibe zugeordnet, die den jeweiligen Öffnungsschlitz innenseitig überdeckt und ihrerseits Öffnungen für die aus den zugehörigen Austrittsdüsen jeweils austretenden Druckgasstrahlen aufweist. Durch die erfindungsgemäße Anordnung einer solchen innen laufenden Ringscheibe, die - von außen gesehen - unterhalb der Öffnungsschlitze rotiert, werden die Öffnungsschlitze zum Innenraum des Gehäuses verschlossen, jedenfalls bis auf enge Ringspalte und die Düsenöffnungen, so dass ein Eindringen von Fremdkörpern, Blatteilen oder Pflanzenresten durch die Schlitze in das Gehäuse verhindert oder zumindest erschwert wird.

Eine vorteilhafte Weiterbildung besteht darin, dass die kreisringförmigen Öffnungsschlitze jeweils aus mehreren im Gehäuse vorgesehenen und von Stegen unterbrochenen teilkreisförmigen Schlitzen ausgebildet sind, also Öffnungen in Form von Kreisringsegmenten bilden. Solche Schlitzöffnungen, die an zwei oder mehr Stellen von einem Steg unterbrochen sind, lassen sich sehr einfach als Ausstanzungen herstellen, sowohl bei metallischen Gehäusen als auch bei Kunststoffen. Von außerhalb des Gehäuses betrachtet, halten dann die Stege eine feststehende zentrale Abdeckscheibe innerhalb der von Schlitzen umgebenden Gehäusefläche.

Natürlich ist auch eine Ausführung ohne Stege mit einem durchgehenden Schlitzring möglich, etwa dann, wenn die von einem Öffnungsschlitz bzw. Ringschlitz umgebene Gehäusefläche über einen äußeren Gehäusebügel oder über eine koaxial zur Drehachse angeordnete feststehende Befestigungsachse fixiert ist.

Durch die in der Ringscheibe vorgesehenen Öffnungen können die rotierenden Druckgasstrahlen so über jeweils bestimmte Kreisschlitzöffnungen oder -abschnitte durch das Gehäuse hindurchtreten und die Pflanze dadurch derart mit kinetischer Energie beaufschlagen, dass eine lokale Entlaubung stattfindet.

In der Praxis kann vorzugsweise reine Druckluft als Druckgas verwendet werden.

Eine weitere vorteilhafte Ausgestaltung der erfindungsgemäßen Druckgasentlaubungsvorrichtung besteht darin, dass das Gehäuse aus mehreren miteinander verbindbaren Gehäuseteilen ausgebildet ist, etwa aus einem Gehäuseoberteil und einem Gehäuseunterteil, wobei ein mit dem Gehäuseunterteil verbindbarer Deckel vorgesehen ist, welcher die als Öffnungsschlitze ausgebildeten Austrittsöffnungen aufweist. Ein solcher Deckel erlaubt nicht nur die Nutzung der zur Pflanze gerichteten Bearbeitungsfläche bei Stillstand der Vorrichtung als Wartungsöffnung, etwa zum Säubern oder zum Düsentausch, sondern ist auch deswegen sinnvoll, weil zur Herstellung der Öffnungsschlitze nicht das gesamte Gehäuse bearbeitet, bewegt oder eingespannt werden muss, sondern lediglich ein ggf. flacher Deckel.

Zumindest ein Teil des Gehäuses, bspw. der Deckel, dient als sogenannter Deflektor oder Abweiser für Früchte oder andere Pflanzenteile, um zu verhindern, dass diese in die Vorrichtung eindringen. Der Deflektor dient auch dazu, die Früchte vor einem Kontakt mit rotierenden Teilen der Vorrichtung zu schützen. Bestimmte Früchte, bspw. Äpfel, sind empfindlich gegenüber mechanischem Kontakt mit harten Objekten und können dadurch leicht Schadstellen entwickeln, die eine Verwendung als Tafelobst verhindern, so dass sie nur noch zur Mostgewinnung genutzt werden können.

Das Gehäuseoberteil bzw. der Deckel kann in Bezug auf das Gehäuseunterteil schwenkbar oder klappbar sein und ist vorzugsweise im Betriebszustand am Gehäuse fixiert. Die Fixierung kann dabei mit üblichen Mitteln erfolgen, beispielsweise mit einer Rastverbindung, einem Schnappverschluss, einem Kniehebelverschluss oder auch mit Schraubverbindungen, etwa mit manuell lösbaren Flügelmuttern oder -schrauben.

Eine weitere vorteilhafte Ausgestaltung besteht darin, dass die Düsen in Bezug auf das Druckgasleitungssystem lösbar ausgebildet sind. Die Düsen können beispielsweise am oder im Druckgasleitungssystem verschraubt sein, etwa in Form von gekröpften Düsen an einem Rohrende einer Druckgasleitung, oder auch mittels eines Bajonettverschlusses mit dem Druckgasleitungssystem verbunden sein. Bei einer Verschraubung, beispielsweise mit einer Schraubmuffe, die die Düse mit einem endseitigen Rohrgewinde verbindet, kann gleichzeitig eine angepasste Winkelstellung der Düse einstellbar sein, so dass erfindungsgemäß der Druckgasstrahl parallel oder in einem spitzen Winkel zur Normalen der Rotationsebene ausgebildet wird.

Eine weitere vorteilhafte Ausgestaltung besteht darin, dass die Öffnungen für die Druckgasstrahlen in der Ringscheibe einen solchen Durchmesser aufweisen, dass die Düsen durch die Öffnung in der Ringscheibe lösbar und/oder austauschbar sind. Eine weitere vorteilhafte Ausgestaltung besteht darin, dass die Ringscheibe und/oder die kreisringförmigen Öffnungsschlitze in ihren Kantenbereichen eine Profilierung aufweisen. Die Kantenprofilierungen von Ringscheibe und Öffnungsschlitz können dabei beispielsweise komplementär so ausgebildet sein, dass eine Art berührungsfrei arbeitende Labyrinthdichtung mit einem engen Spaltraum entsteht, durch den keine Fremdkörper eintreten können. Auch wird durch einen engen Spalt die Geräuschemission etwaiger innerhalb des Gehäuses befindlicher Getriebe oder Motoren verringert.

Eine weitere vorteilhafte Ausgestaltung besteht darin, dass die Kanten der Ringscheibe auf ihrem Innenumfang und/oder ihrem Außenumfang wannenartig aufgebogen sind, vorzugsweise in Richtung auf das Gehäuse aufgebogen sind. Eine solche Profilierung erhöht die Steifigkeit bzw. das Widerstandmoment normal zur Rotationsebene und sorgt für ruhigen Lauf ohne "Flattern", also für eine erhöhte Stabilität der rotierenden Ringscheibe.

Eine weitere vorteilhafte Ausgestaltung besteht darin, dass die Kanten der kreisringförmigen Öffnungsschlitze auf ihrem Innenumfang und/oder ihrem Außenumfang in Richtung auf die Ringscheibe gebogen sind, vorzugsweise komplementär zu einer Kantenprofilierung der Ringscheibe. Das führt dazu, dass ähnlich wie bei der oben erwähnten Labyrinthdichtung ein enger Spaltraum entsteht, der die dort bereits genannten Vorteile ebenfalls ausreichend realisiert. Die Kantenbiegung der Öffnungsschlitze erhöht aber auch das Widerstandsmoment und damit die Formsteifigkeit der die Schlitze enthaltenden Gehäuseteile/Gehäuseflächen bzw. des entsprechend ausgebildeten Deckels.

Eine weitere vorteilhafte Ausgestaltung besteht darin, dass mindestens der innerhalb der einen oder mehreren Austrittsöffnungen befindliche Teil des Gehäuses eine Profilgebung aufweist, vorzugsweise eine Konkavität oder zum Gehäuseinneren rückspringende Einbuchtung. Da im Betrieb der Vorrichtung die die Austrittsöffnungen enthaltenden Gehäuseflächen zur Pflanze ausgerichtet sind, entsteht durch eine solche Ausbildung eine Reduktion der Kontaktfläche zur Pflanze bzw. eine weniger starke Pressung, wenn die Vorrichtung mit Kontakt an eine Pflanze angelegt oder an ihr entlang bewegt wird.

Bei einer erfindungsgemäßen Vorrichtung mit mehreren in einem Gehäuse rotierend antreibbaren Düsenanordnungen besteht eine besonders vorteilhafte Weiterbildung darin, dass mehrere Düsenanordnungen und/oder mehrere Ringscheiben antriebsmäßig miteinander gekoppelt sind. Das reduziert nicht nur die Komplexität der Vorrichtung, sondern vereinfacht auch die Wartung sowie die Ersatzteilhaltung und spart zudem Energie.

Je nach konstruktiver Ausführung bieten sich für die antriebsmäßige Kopplung bewährte und in allen Ausführungen erhältliche, einfache Systeme an, beispielsweise eine Kopplung in Form eines Riementriebs, bei der etwa zwei in einem Abstand nebeneinanderliegende rotierende Druckgasleitungssysteme jeweils zentrale Zahnriemenscheiben aufweisen, die über Zugmittel gekoppelt sind, welche als Zahnriemen ausgebildet sind. Vorteilhaft bei kleineren Abständen sind auch Reibräder oder eine direkte Kopplung mit ineinandergreifenden Stirnzahnrädern. Natürlich sind auch einfache Kettentriebe möglich.

Eine weitere vorteilhafte, weil konstruktiv überaus einfach ausgebildete Konstruktion der erfindungsgemäßen Vorrichtung besteht darin, dass die jeweilige Ringscheibe mit dem zugehörigen rotierenden Druckgasleitungssystem direkt drehfest verbunden ist.

Eine weitere vorteilhafte Ausbildung einer Vorrichtung mit einer oder mehreren in einem Gehäuse rotierend antreibbaren Düsenanordnungen besteht darin, dass eine zentrale Druckgasversorgung für die Düsenanordnungen vorgesehen ist, vorzugsweise eine Druckgasversorgung, die pulsierende Druckstöße erzeugt oder dem Druckgasstrom überlagert. Ein solche zentrale Druckgasversorgung kann beispielsweise mit einem zentral angeschlossenen Druckgasschlauch erfolgen, der mit einem außerhalb des Gehäuses befindlichen Kompressor verbunden ist, etwa mit einem Kompressor auf einem Traktor, der eine Halterung für die Vorrichtung aufweist und diese an die zu entlaubenden Pflanzen heranfährt.

Eine weitere vorteilhafte Ausbildung besteht darin, dass das Druckgasleitungssystem als druckgasleitendes Rohrleitungs- oder Schlauchleitungssystem ausgebildet ist. Eine solche Ausführung ist einfach herzustellen, kann leicht durch Gegengewichte ausgewuchtet und bei Verschleiß einfach repariert werden.

Um die Pflanzen und insbesondere die Früchte so wenig wie möglich zu schädigen, kann das Gehäuse der Vorrichtung natürlich eine entsprechende gärtnerischfachmännische Gestaltung aufweisen, beispielsweise mit abgerundeten Kanten und wenig Vorsprüngen ausgebildet sein, um beim Vorbeifahren bzw. beim Vorbeigleiten der Vorrichtung in Kontakt kommende Früchte sanfter an dem Gehäuse vorbei zu führen und ein Verhaken zu vermeiden. Das Material kann Blech sein, aber insbesondere Kunststoff ist wegen der elastischen Verformbarkeit gut geeignet. Das geringe Gewicht von Kunststoff erleichtert zudem die Handhabung der Vorrichtung. Eine zumindest teilweise Beschichtung der Außenoberfläche mit einem weichen, nachgiebigen oder leicht kompressiblen Material, bspw. Weichschaum, unterstützt ebenfalls eine frucht- und/oder pflanzenschonende Entlaubung.

### Kurze Beschreibung der Zeichnung

Die Erfindung wird im Folgenden anhand eines Ausführungsbeispiels unter Bezugnahme auf die begleitenden Figuren näher erläutert. Alle Figuren sind rein schematisch und nicht maßstäblich. Es zeigen
- Fig. 1: eine erfindungsgemäße Druckgasentlaubungsvorrichtung mit einer doppelt ausgebildeten Düsenanordnung in einer perspektivischen Aufsicht,
- Fig. 2: den Sockelteil einer Vorrichtung gemäß Fig.1 bei abgenommenem Gehäuseoberteil,
- Fig. 3: innerhalb einer Vorrichtung gemäß Fig.1 angeordnete rotierend antreibbaren Düsenanordnungen in einer vergrößerten, perspektivischen Ansicht,
- Fig. 4: eine vergrößerte Zusammenstellungsskizze einer Vorrichtung gemäß Fig.1 im Teilschnitt mit Düsenanordnung.

Gleiche oder ähnliche Elemente sind in den Figuren mit gleichen oder ähnlichen Bezugszeichen versehen.

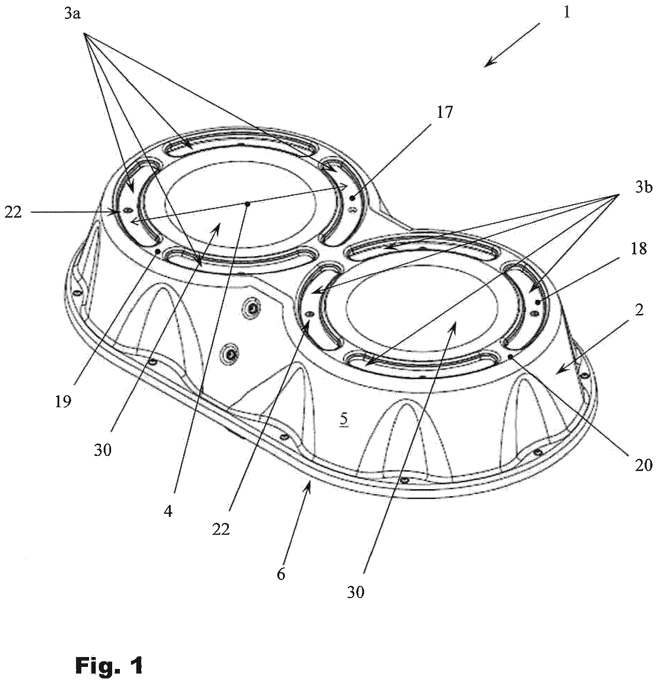

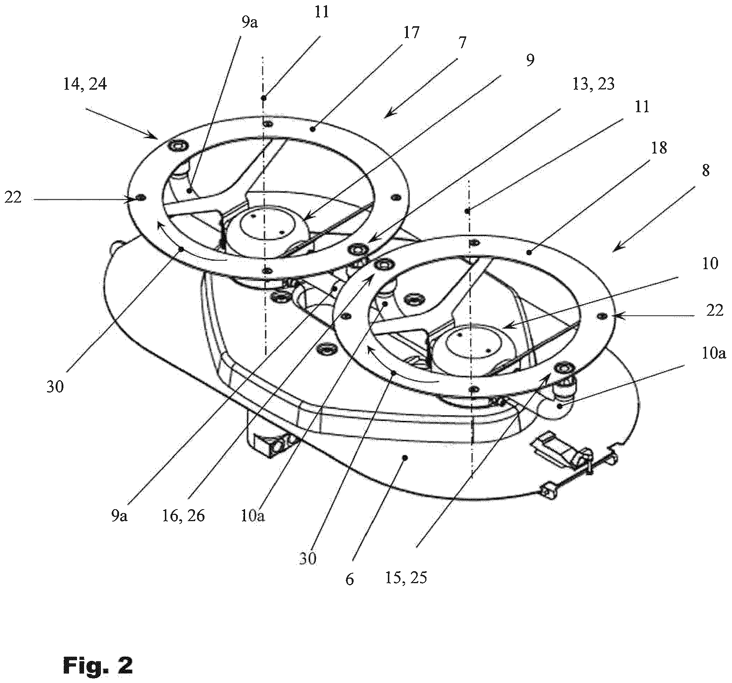

Fig. 1 zeigt eine Druckgasentlaubungsvorrichtung 1 mit einer doppelt ausgebildeten Düsenanordnung in einem gemeinsamen Gehäuse 2 in einer perspektivischen Aufsicht. Die Düsenanordnungen und ihre Lage im Gehäuse 2 sind in der Zusammenschau der Fig. 1 und 2 erkennbar.

Das Gehäuse 2 weist für jede der in der Fig.2 erkennbaren Düsenanordnung 7, 8 jeweils vier kongruente, als kreisringförmige Öffnungsschlitze 3a und 3b ausgebildete Austrittsöffnungen für die unten näher beschriebenen rotierenden Druckgasstrahlen auf. Der Durchmesser 4 auf dem die jeweiligen Öffnungsschlitze 3a und 3b liegen entspricht der Kreisbahn, auf der die jeweils zugehörigen und weiter unten beschriebenen Austrittsdüsen rotieren, die Breite der Schlitze entspricht vorzugsweise mindestens der Größe der Austrittsöffnung der Austrittsdüsen.

Das Gehäuse 2 besteht im Wesentlichen aus einem abnehmbaren Oberteil 5 und einem Sockelteil 6, in dem sich die hier nicht näher dargestellten Lagerungen und Getriebe der Düsenanordnungen bzw. der zugehörigen Druckgasleitungssysteme befinden. Die kreisringförmigen Öffnungsschlitze 3a, 3b sind hier als mehrere im Gehäuseoberteil 5 ausgestanzte teilkreisförmige Schlitze ausgebildet, die jeweils von vier auf dem Umfang gleichmäßig verteilten Stegen 19, 20 unterbrochenen sind

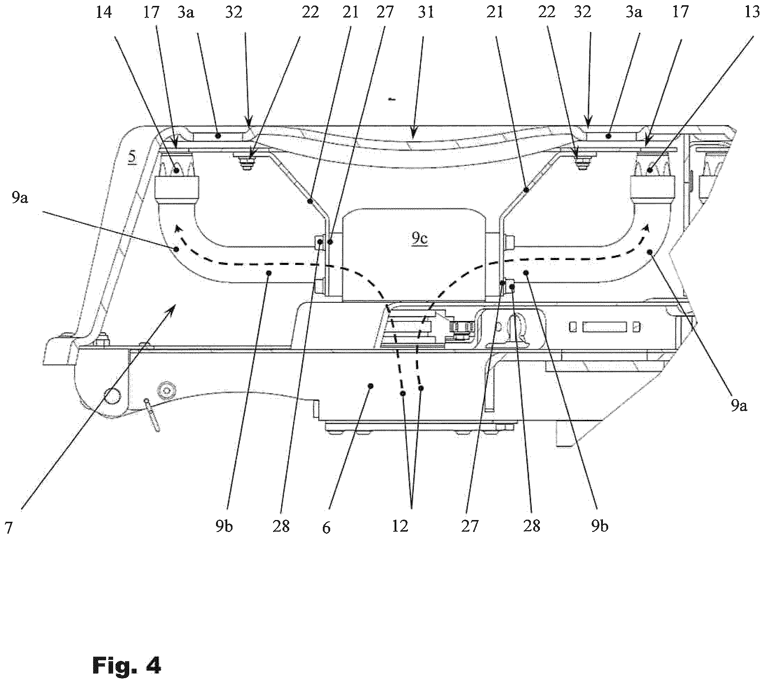

Fig. 2 zeigt nun den Sockelteil 6 bei abgenommenem Gehäuseoberteil 5. In der Figur sind die rotierend antreibbaren Düsenanordnungen 7, 8 erkennbar, wobei die Düsenanordnungen Teil jeweils eines um eine zugehörige zentrale Achse 11 rotierenden Druckgasleitungssystems 9, 10 sind, welche hier als Druckluftleitungssysteme ausgebildet sind und jeweils eine zentrale Druckluftzuführung 12 aufweisen, wie insbesondere in der Zusammenschau mit der Fig. 4 deutlich wird.

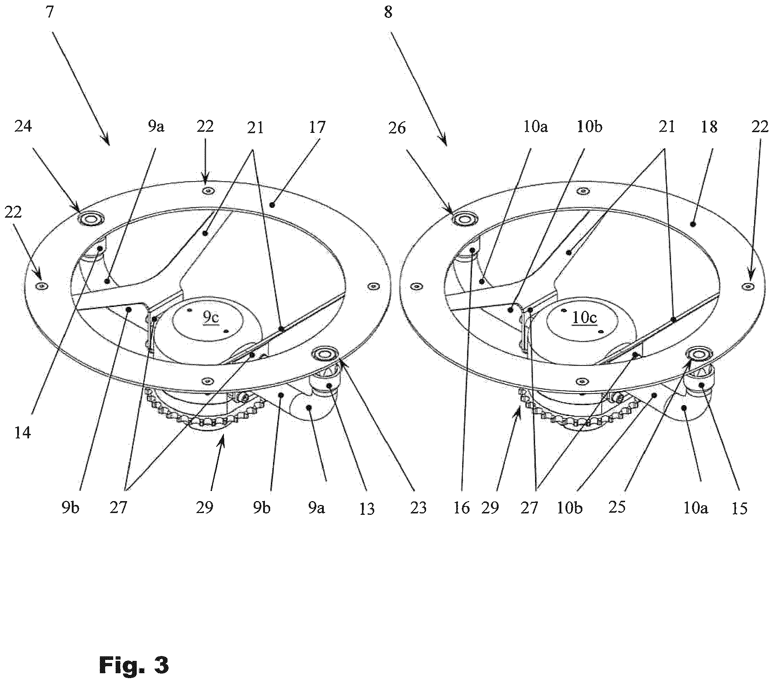

Fig. 2 verdeutlicht auch, dass an mehreren Umfangspositionen der Druckgasleitungssysteme 9, 10, hier jeweils an zwei Umfangspositionen, Austrittsdüsen 13, 14, 15 und 16 für Druckgas vorgesehen sind. Die Austrittsdüsen sind hier jeweils am Ende von nach oben gebogenen Endstücken 9a, 10a gegenüberliegender Rohrleitungsarme 9b, 10b der Druckgasleitungssysteme 9, 10 angeordnet. Die Düsenöffnungen sind in der Fig. 1 nicht erkennbar, da sie dort in der dargestellten Position von den Stegen 19, 20 des Gehäuses verdeckt werden. Die Rohrleitungsarme 9b, 10b sind in der Zusammenschau mit der Fig.3 leichter erkennbar.

Die Austrittsdüsen 13, 14, 15 und 16 erzeugen jeweils einen konzentrisch zur jeweiligen zentralen Achse rotierenden, parallel zur Normalen der Rotationsebene ausgebildeten und durch die jeweilige Düsenöffnung austretenden Druckgasstrahl, der in der Figur nicht dargestellt ist. Die Druckgasstrahlen treten in Bezug auf die isometrischen Darstellungen der Fig. 1, 2 und 3 also im Wesentlichen gerade nach oben aus.

Jeder rotierenden Düsenanordnung ist eine innerhalb des Gehäuses 2 in gleicher Umfangsgeschwindigkeit mit der jeweiligen Düsenanordnung 7, 8 konzentrisch rotierende Ringscheibe 17, 18 zugeordnet, die die jeweiligen Öffnungsschlitze 3a und 3b im Gehäuseoberteil 5 innenseitig überdeckt, bei geschlossenem Gehäuse also direkt unterhalb der Öffnungsschlitze rotiert, und einen Durchtritt von Fremdkörpern durch die Öffnungsschlitze verhindert. Die Ringscheiben 17, 18 sind in der Fig.1 unterhalb der Öffnungsschlitze 3a und 3b erkennbar.

Um den Austritt der Gasstrahlen zu ermöglichen, weisen die Ringscheiben 17, 18 ihrerseits Öffnungen 23, 24, 25 und 26 für die aus den zugehörigen Austrittsdüsen 13, 14, 15 und 16 jeweils austretenden Druckgasstrahlen auf. Dies wird insbesondere in der Zusammenschau mit der Fig.3 deutlich.

Fig. 3 zeigt die rotierend antreibbaren Düsenanordnungen 7, 8 in vergrößerter, perspektivischer Ansicht so, wie sie bei dieser Ausführung innerhalb des Gehäuses 2 zueinander angeordnet sind. Man erkennt hier gut, dass jedes Druckgasleitungssystem mit den Austrittsdüsen 13, 14, 15 und 16 als Rohrleitungssystem ausgebildet ist und jeweils zwei gegenüberliegende Rohrleitungsarme 9b, 10b aufweist, welche ausgehend von einem mittigen Druckgas-Verteilerkopf 9c, 10c die nach oben gebogenen Endstücke 9a, 10a des Druckgasleitungssystems mit dem Druckgas-Verteilerkopf 9c, 10c verbinden. An den Endstücken 9a, 10a sind wiederum endseitig die so ebenfalls nach oben gerichteten Austrittsdüsen 13, 14, 15 und 16 angeordnet.

Die jeweiligen Ringscheiben 17, 18 sind über Haltebügel 21 mit dem zugehörigen rotierenden Druckgasleitungssystem 9, 10 drehfest verbunden. Dazu sind die Haltebügel 21 einerseits mit Schrauben 22 an der Unterseite der Ringscheiben 17, 18 befestigt und andererseits über Flanschbleche 27 und Schrauben 28 an den Rohrleitungsarmen 9b, 10b angeschraubt.

Die Öffnungen 23 - 26 für die Druckgasstrahlen in den jeweiligen Ringscheiben 17, 18 weisen einen solchen Durchmesser auf, dass die hier in die gebogenen Endstücken 9a, 10a eingeschraubten Austrittsdüsen 13 - 16 durch die Öffnung 23 - 26 in der Ringscheibe lösbar und/oder austauschbar sind.

Wie oben bereits erläutert befinden sich im Sockelteil 6 des Gehäuses 2 hier nicht näher dargestellte Lagerungen und Antriebe der rotierend antreibbaren Düsenanordnungen 7 und 8. Dazu weisen hier die Druckgasverteilerköpfe 9c, 10c an ihren unteren Ende jeweils einen Zahnkranz 29 auf, in dessen Verzahnung ein hier ebenfalls nicht näher dargestellter als Zahnriemen oder Kette ausgebildeter Zugmitteltrieb eingreift und die Düsenanordnungen und damit auch die verbundenen Ringscheiben antriebsmäßig miteinander koppelt und in der bei dieser Ausführung vorgesehenen Rotationsrichtung 30 antreibt, wie in der Zusammenschau mit Fig.2 erkennbar. Der Anrieb des Zugmitteltriebs erfolgt mittels eines in der Figur nicht dargestellten Motors, welcher einen entsprechenden Zahnkranz antreibt.

Fig. 4 zeigt noch einmal eine vergrößerte Zusammenstellungsskizze, welche im Wesentlichen die linke Seite der in Fig. 1 oder 2 gezeigten Vorrichtung im Teilschnitt mit der Düsenanordnung 7 darstellt. Zu erkennen sind hier wieder das aus einem abnehmbaren Oberteil 5 und einem Sockelteil 6 bestehende Gehäuse 2 im Zusammenbau. Im Gehäuse befindet sich die hier sichtbare rotierend antreibbare Düsenanordnung 7 mit zugehörigem Druckgasleitungssystem 9, d.h. mit den beiden gegenüberliegenden Rohrleitungsarmen 9b, mit dem mittigen Druckgas-Verteilerkopf 9c, den nach oben gebogenen Endstücken 9a und mit den ebenfalls nach oben gerichteten Austrittsdüsen 13, 14.

Ebenfalls zu erkennen sind die über Haltebügel 21 mit dem zugehörigen rotierenden Druckgasleitungssystem 9 drehfest verbundene Ringscheibe 17, die Befestigungsschrauben 22 und 28, wobei mit letzteren die Flanschbleche 27 am Rohrleitungsarm 9b bzw. am Druckgas-Verteilerkopf 9c befestigt sind.

Deutlich sichtbar sind in dieser Schnittdarstellung auch die in der Aufsicht nach Fig. 1 erkennbaren als teilkreisförmige Öffnungsschlitze 3a ausgebildeten Austrittsöffnungen. Fig. 4 verdeutlicht auch weitere vorteilhafte Ausbildungen der Erfindung, nämlich zum einen, dass der innerhalb der teilkreisförmigen Öffnungsschlitze 3a befindliche Teil des Gehäuses, hier des Gehäuseoberteils 5 eine Konkavität oder rückspringende Einbuchtung 31 aufweist.

Die erfindungsgemäße Druckgasentlaubungsvorichtung ist der Regel an einem Auslegerarm eines Traktors befestigt und im Entlaubungsbetrieb so ausgerichtet, dass die Oberseite des Gehäuses zur Pflanze zeigt und so nah an der Pflanze vorbeigeführt wird, das die rotierenden Druckgasstrahlen die Pflanze entlauben. Durch die rückspringende Einbuchtung entsteht eine Reduktion der möglichen Kontaktfläche zur Pflanze bzw. eine weniger starke Pressung, so dass eine die Früchte schonende Entlaubung stattfindet.

Ebenfalls zu erkennen ist, dass die kreisringförmigen Öffnungsschlitze 3a auf ihrem Innenumfang und ihrem Außenumfang eine Profilierung 32 aufweisen und in Richtung auf die Ringscheibe 17 gebogen sind. Wie oben bereits dargestellt, führt diese Profilierung nicht nur zu einer geringeren Geräuschemission aus dem Innenraum, sondern auch dazu, dass ein relativ enger Spalt zum Innenraum des Gehäuses entsteht und dass das Widerstandsmoment und damit die Formsteifigkeit der die Schlitze enthaltenden Gehäusefläche erhöht wird.

Fig. 4 zeigt darüber hinaus auch schematisch und anhand der gestrichelten Linien die zentrale Druckgasversorgung, hier die Druckluftversorgung 12 für die Düsenanordnungen.

### Bezugszeichenliste

- 1: Druckgasentlaubungsvorrichtung
- 2: Gehäuse
- 3a, 3b: Öffnungsschlitz / Austrittsöffnung
- 4: Durchmesser der Öffnungsschlitze
- 5: Oberteil des Gehäuses
- 6: Sockelteil des Gehäuses
- 7, 8: Düsenanordnung
- 9, 10: Druckgasleitungssystem
- 9a, 10a: gebogenes Endstück
- 9b, 10b: Rohrleitungsarm
- 9c, 10c: Druckgas-Verteilerkopf
- 11: zentrale Achse
- 12: zentrale Druckluftzuführung
- 13 - 16: Austrittsdüse
- 17, 18: konzentrisch rotierende Ringscheibe
- 19, 20: Steg
- 21: Haltebügel
- 22: Schraube
- 23 - 26: Öffnung in der Ringscheibe
- 27: Flanschblech
- 28: Schraube
- 29: Zahnkranz
- 30: Rotationsrichtung
- 31: Einbuchtung
- 32: Profilierung der Öffnungsschlitze

## Patentansprüche

1. Druckgasentlaubungsvorrichtung (1) mit mindestens einer in einem Gehäuse (2) rotierend antreibbaren Düsenanordnung (7, 8), wobei die Düsenanordnung Teil eines um eine zugehörige zentrale Achse (11) rotierenden Druckgasleitungssystems (9, 10) mit jeweils einer zentralen Druckgaszuführung (12) ist, wobei jeweils eine oder mehrere Austrittsdüsen (13, 14, 15, 16) für Druckgas an einer oder mehreren Umfangspositionen des Druckgasleitungssystems (9, 10) vorgesehen sind und die Austrittsdüsen jeweils einen konzentrisch zur jeweiligen zentralen Achse (11) rotierenden, parallel oder in einem spitzen Winkel zur Normalen der Rotationsebene ausgebildeten Druckgasstrahl erzeugen, wobei das Gehäuse (2) eine oder mehrere als kreisringförmige Öffnungsschlitze (3a, 3b) ausgebildete Austrittsöffnungen für die rotierenden Druckgasstrahlen aufweist, welche auf einer Kreisbahn liegen, auf der die jeweils zugehörigen Austrittsdüsen rotieren, **dadurch gekennzeichnet, dass** jeder rotierenden Düsenanordnung mindestens eine innerhalb des Gehäuses in gleicher Winkelgeschwindigkeit mit der Düsenanordnung (7, 8) konzentrisch rotierende Ringscheibe (17, 18) zugeordnet ist, die den jeweiligen Öffnungsschlitz (3a, 3b) innenseitig überdeckt und ihrerseits Öffnungen (23, 24, 25, 26) für die aus den zugehörigen Austrittsdüsen (13, 14, 15, 16) jeweils austretenden Druckgasstrahlen aufweist.

2. Vorrichtung nach Anspruch 1, bei der die kreisringförmigen Öffnungsschlitze (3a, 3b) jeweils aus mehreren im Gehäuse vorgesehenen und von Stegen unterbrochenen teilkreisförmigen Schlitzen ausgebildet sind.

3. Vorrichtung nach Anspruch 1 oder 2, bei der das Gehäuse aus mehreren Gehäuseteilen (5, 6) ausgebildet ist, wobei vorzugsweise eines der Gehäuseteile als mit einem Unterteil des Gehäuses verbindbarer Deckel vorgesehen ist, welcher die als Öffnungsschlitze ausgebildeten Austrittsöffnungen aufweist.

4. Vorrichtung nach Anspruch 3, wobei der Deckel in Bezug auf das Gehäuse schwenkbar oder klappbar und im Betriebszustand am Gehäuse fixiert ist.

5. Vorrichtung nach einem der Ansprüche 1 bis 4, bei der die Düsen in Bezug auf das Druckgasleitungssystem lösbar ausgebildet sind.

6. Vorrichtung nach Anspruch 5, bei der die Öffnungen (23, 24, 25, 26) für die Druckgasstrahlen in der Ringscheibe (17, 18) einen solchen Durchmesser aufweisen, dass die Austrittsdüsen (13, 14, 15, 16) durch die Öffnung in der Ringscheibe lösbar und/oder austauschbar sind.

7. Vorrichtung nach einem der Ansprüche 1 bis 6, bei der die Ringscheibe (17, 18) und/oder die kreisringförmigen Öffnungsschlitze (3a, 3b) in ihren Kantenbereichen eine Profilierung (32) aufweisen.

8. Vorrichtung nach Anspruch 7, bei der die Kanten der Ringscheibe (17, 18) auf ihrem Innenumfang und/oder ihrem Außenumfang wannenartig aufgebogen sind, vorzugsweise in Richtung auf das Gehäuse (2, 5) aufgebogen sind.

9. Vorrichtung nach Anspruch 7 oder 8, bei der die Kanten der kreisringförmigen Öffnungsschlitze (3a, 3b) auf ihrem Innenumfang und /oder ihrem Außenumfang in Richtung auf die Ringscheibe (17, 18) gebogen sind, vorzugsweise komplementär zu einer Kantenprofilierung der Ringscheibe.

10. Vorrichtung nach einem der Ansprüche 1 bis 9, bei der mindestens der innerhalb der einen oder mehreren Austrittsöffnungen befindliche Teil des Gehäuses eine Konkavität oder rückspringende Einbuchtung (31) aufweist.

11. Vorrichtung nach einem der Ansprüche 1 bis 10, wobei in dem Gehäuse mehrere rotierend antreibbare Düsenanordnungen (7, 8) vorgesehen sind, und wobei die mehreren Düsenanordnungen und/oder den Düsenanordnungen jeweils zugeordnete Ringscheiben antriebsmäßig miteinander gekoppelt sind.

12. Vorrichtung nach Anspruch 11, bei der die antriebsmäßige Kopplung über Zugmitteltriebe, Reibräder oder Zahnräder erfolgt.

13. Vorrichtung nach einem der Ansprüche 1 bis 12, bei der die Ringscheibe (17, 18) mit dem zugehörigen rotierenden Druckgasleitungssystem (9, 10) drehfest verbunden ist.

14. Vorrichtung nach einem der Ansprüche 1 bis 13, wobei eine zentrale Druckgasversorgung (12) für die eine oder mehreren Düsenanordnungen vorgesehen ist, vorzugsweise eine Druckgasversorgung, die pulsierende Druckstöße erzeugt oder dem Druckgasstrom überlagert.

15. Vorrichtung nach einem der Ansprüche 1 bis 14, bei der das Druckgasleitungssystem als Rohrleitungs- oder Schlauchleitungssystem ausgebildet ist, vorzugsweise als druckluftleitendes System.

16. Vorrichtung nach einem oder mehreren der vorhergehenden Ansprüche, wobei eine den zu entlaubenden Pflanzen zugewandte Außenoberfläche zumindest teilweise mit einer Schicht aus einem nachgiebigen oder leicht kompressiblen Material beschichtet ist.

## Claims

1. Compressed gas defoliation device (1) having at least one nozzle assembly (7, 8) that can be driven in rotation in a housing (2), wherein the nozzle assembly is part of a compressed gas line system (9, 10) rotating about an associated central axis (11) and having a central compressed gas supply (12) each, wherein in each case one or more outlet nozzles (13, 14, 15, 16) for compressed gas are provided at one or more circumferential positions of the compressed gas line system (9, 10), and the outlet nozzles each generate a compressed gas jet rotating concentrically with the respective central axis (11) and formed parallel or at an acute angle to the normal to the plane of rotation, wherein the housing (2) has one or more outlet openings formed as ring-shaped opening slots (3a, 3b) for the rotating compressed gas jets, which lie on a circular path on which the respectively associated outlet nozzles rotate, **characterized in that** each rotating nozzle assembly is assigned at least one annular disc (17, 18) rotating concentrically with the nozzle assembly (7, 8) at the same angular velocity within the housing, which covers the respective opening slot (3a, 3b) on the inside and for its part has openings (23, 24, 25, 26) for the compressed gas jets each emerging from the associated outlet nozzles (13, 14, 15, 16).

2. Device according to Claim 1, in which the ring-shaped opening slots (3a, 3b) are each formed by a plurality of partially circular slots provided in the housing and interrupted by webs.

3. Device according to Claim 1 or 2, in which the housing is formed from a plurality of housing parts (5, 6), wherein one of the housing parts is preferably provided as a cover that can be connected to a lower part of the housing and has the outlet openings formed as opening slots.

4. Device according to Claim 3, wherein the cover can be pivoted or folded in relation to the housing and, in the operating state, is fixed to the housing.

5. Device according to one of Claims 1 to 4, in which the nozzles are designed to be detachable in relation to the compressed gas line system.

6. Device according to Claim 5, in which the openings (23, 24, 25, 26) for the compressed gas jets in the annular disc (17, 18) have a diameter such that the outlet nozzles (13, 14, 15, 16) can be detached and/or exchanged through the opening in the annular disc.

7. Device according to one of Claims 1 to 6, in which the annular disc (17, 18) and/or the ring-shaped opening slots (3a, 3b) have a profile (32) in their edge regions.

8. Device according to Claim 7, in which the edges of the annular disc (17, 18) are bent up in the form of a trough on their inner circumference and/or their outer circumference, preferably are bent up in the direction of the housing (2, 5).

9. Device according to Claim 7 or 8, in which the edges of the ring-shaped opening slots (3a, 3b) are curved in the direction of the annular disc (17, 18) on their inner circumference and/or their outer circumference, preferably in a manner complementary to an edge profile of the annular disc.

10. Device according to one of Claims 1 to 9, in which at least the part of the housing that is located within the one or more outlet openings has a concavity or recessed indentation (31).

11. Device according to one of Claims 1 to 10, wherein a plurality of nozzle assemblies (7, 8) that can be driven in rotation are provided in the housing, and wherein the plurality of nozzle assemblies and/or annular discs each associated with the nozzle assemblies are coupled to one another in terms of drive.

12. Device according to Claim 11, in which the drive coupling is made via flexible drives, friction wheels or gear wheels.

13. Device according to one of Claims 1 to 12, in which the annular disc (17, 18) is co-rotationally connected to the associated rotating compressed gas line system (9, 10).

14. Device according to one of Claims 1 to 13, wherein a central compressed gas supply (12) is provided for the one or more nozzle assemblies, preferably a compressed gas supply which generates pulsating pressure surges or superimposes them on the compressed gas stream.

15. Device according to one of Claims 1 to 14, in which the compressed gas line system is formed as a pipeline or hose line system, preferably as a compressed air carrying system.

16. Device according to one or more of the preceding claims, wherein an outer surface facing the plants to be defoliated is at least partly coated with a layer of a resilient or easily compressible material.

## Revendications

1. Dispositif de défoliation à gaz comprimé (1) avec au moins un agencement de buses (7, 8) pouvant être entraîné en rotation dans un boîtier (2), l'agencement de buses faisant partie d'un système de conduite de gaz comprimé (9, 10) en rotation autour d'un axe central correspondant (11) avec respectivement une amenée de gaz comprimé centrale (12), respectivement une ou plusieurs buses de sortie (13, 14, 15, 16) pour le gaz comprimé étant prévues à une ou plusieurs positions périphériques du système de conduite de gaz comprimé (9, 10) et les buses de sortie produisant respectivement un jet de gaz comprimé en rotation concentriquement à l'axe central respectif (11), réalisé parallèlement ou selon un angle aigu par rapport à la normale au plan de rotation, le boîtier (2) présentant une ou plusieurs ouvertures de sortie pour les jets de gaz comprimé en rotation, réalisées sous forme de fentes d'ouverture (3a, 3b) en forme d'anneau de cercle, qui se situent sur une trajectoire circulaire sur laquelle les buses de sortie correspondantes respectives tournent, **caractérisé en ce qu'**à chaque agencement de buses en rotation est associé au moins un disque annulaire (17, 18) en rotation concentriquement à l'intérieur du boîtier à la même vitesse angulaire que l'agencement de buses (7, 8), qui recouvre intérieurement la fente d'ouverture (3a, 3b) respective et qui présente à son tour des ouvertures (23, 24, 25, 26) pour les jets de gaz comprimé sortant respectivement des buses de sortie (13, 14, 15, 16) correspondantes.

2. Dispositif selon la revendication 1, dans lequel les fentes d'ouverture en forme d'anneau de cercle (3a, 3b) sont réalisées respectivement à partir de plusieurs fentes en forme d'anneau partiel prévues dans le boîtier et interrompues par des entretoises.

3. Dispositif selon la revendication 1 ou 2, dans lequel le boîtier est réalisé à partir de plusieurs parties de boîtier (5, 6), l'une des parties de boîtier étant de préférence prévue en tant que couvercle pouvant être relié à une partie inférieure du boîtier, lequel présente les ouvertures de sortie réalisées sous forme de fentes d'ouverture.

4. Dispositif selon la revendication 3, dans lequel le couvercle peut pivoter ou être rabattu par rapport au boîtier et est fixé au boîtier en état de fonctionnement.

5. Dispositif selon l'une quelconque des revendications 1 à 4, dans lequel les buses sont réalisées sous forme amovible par rapport au système de conduite de gaz comprimé.

6. Dispositif selon la revendication 5, dans lequel les ouvertures (23, 24, 25, 26) pour les jets de gaz comprimé dans le disque annulaire (17, 18) présentent un diamètre tel que les buses de sortie (13, 14, 15, 16) sont amovibles et/ou interchangeables à travers l'ouverture dans le disque annulaire.

7. Dispositif selon l'une quelconque des revendications 1 à 6, dans lequel le disque annulaire (17, 18) et/ou les fentes d'ouverture (3a, 3b) en forme d'anneau de cercle présentent un profilage (32) dans leurs zones de bord.

8. Dispositif selon la revendication 7, dans lequel les bords du disque annulaire (17, 18) sont repliés en forme de cuvette sur leur périphérie intérieure et/ou leur périphérie extérieure, de préférence sont repliés en direction du boîtier (2, 5).

9. Dispositif selon la revendication 7 ou 8, dans lequel les bords des fentes d'ouverture (3a, 3b) en forme d'anneau de cercle sont courbés sur leur circonférence intérieure et/ou leur circonférence extérieure en direction du disque annulaire (17, 18), de préférence de manière complémentaire à un profilage des bords du disque annulaire.

10. Dispositif selon l'une quelconque des revendications 1 à 9, dans lequel au moins la partie du boîtier se trouvant à l'intérieur des une ou plusieurs ouvertures de sortie présente une concavité ou un renfoncement en retrait (31).

11. Dispositif selon l'une quelconque des revendications 1 à 10, dans lequel plusieurs agencements de buses (7, 8) pouvant être entraînés en rotation sont prévus dans le boîtier, et dans lequel les plusieurs agencements de buse et/ou les disques annulaires associés respectivement aux agencements de buses sont couplés entre eux en entraînement.

12. Dispositif selon la revendication 11, dans lequel le couplage en entraînement s'effectue par l'intermédiaire de transmissions par traction, de roues de friction ou de roues dentées.

13. Dispositif selon l'une quelconque des revendications 1 à 12, dans lequel le disque annulaire (17, 18) est relié de manière solidaire en rotation au système de conduite de gaz comprimé en rotation correspondant (9, 10).

14. Dispositif selon l'une quelconque des revendications 1 à 13, dans lequel une alimentation en gaz comprimé centrale (12) pour les un ou plusieurs agencements de buses est prévue, de préférence une alimentation en gaz comprimé qui produit des impulsions de pression ou les superpose au courant de gaz comprimé.

15. Dispositif selon l'une quelconque des revendications 1 à 14, dans lequel le système de conduite de gaz comprimé est réalisé sous forme de système de conduite tubulaire ou de conduite en tuyau, de préférence sous forme de système de conduite d'air comprimé.

16. Dispositif selon une ou plusieurs des revendications précédentes, dans lequel une surface extérieure tournée vers les plantes à défolier est au moins partiellement revêtue d'une couche en un matériau souple ou légèrement compressible.
